# EUROPEAN PATENT APPLICATION

(11) **EP 1 428 434 A1**
(43) Date of publication of application: **16.06.2004**
(21) Application number: 03027499.7
(22) Date of filing: 02.12.2003
(51) Int. Cl.: A21B 3/15

(54) **Supporting baking-plate for oven products**

(30) Priority: 09.12.2002 IT VR20020069
(71) Applicant: ATREPAN S.r.l., 37060 Buttapietra Verona (IT)
(72) Inventor: Caliari, Danilo, 37060 Castel d'Azzano (Verona) (IT)
(74) Representative: Savi, Alberto

(57) **Abstract**

The main peculiarity of the proposed baking-plate or baking-pan is a total absence of rivets or other connecting elements between the supporting surface and the plate border or frame. The supporting surface may be either flat or corrugated while the border or frame shows angular elements made of a bent foil.

In general, the border or frame of the baking-plate or baking-pan is made of four sides (1, 2) which are hollow structural shapes made preferably of metal and showing a squared section. Particular slots (3) are obtained along the inner surfaces of the sides (1, 2).
For the connection of the so-shaped structural shapes it is sufficient to bend the edges (4) of the supporting surface (5) upward or downward, to join the structural shapes to the edges and to fasten the angles with soldering points or other suited means.

## Description

The present invention refers to a supporting shaped baking-plate or baking pan which has been conceived for the support of oven products such as bread or the like.

The main peculiarity of the proposed baking-plate or baking-pan is a total absence of rivets or other connecting elements between the supporting surface and the plate border or frame. The supporting surface may be either flat or corrugated and is made of a bent iron.

In general, in comparison with the known solutions, the baking-pan according to the present invention permits a better hygiene and stability. In addition, the baking-plate is carried out automatically by utilizing numerical control laser machines.

As is known, in the field of bread-making and oven products in general, it is necessary to put the pieces of dough or pastry on suitable plates for the various production phases.

In particular, baking-plates or baking-pans are widely utilized. Such plates or pans are usually made of aluminium and show a rectangular or squared shape. After the dough or pastry has been put on the plates or pans, they are inserted in suitable trolleys for the leavening phases. Finally, the plates or pans are taken from the trolleys and inserted in the oven to obtain the finished product.

As said, the baking-plates show a rectangular o squared shape and are manufactured by utilizing a metal perforated plate. In some cases, the perforated metal plate shows borders obtained by bending the outer sides. In other cases, when it is necessary to make the baking-pan stronger, a containing metal frame or border is applied.

The problem of the known solutions is that the plate and its frame are fixed to each other through fixing means such as screws or rivets which cause a gathering and keeping back or flour or other material which adheres and is difficult to be removed as well as a certain difficulty in automatising the fastening of the plate to its respective frame.

The aim of the present invention is to remove the above drawbacks by carrying out a plate or pan in which the supporting surface may be either flat or corrugated and is coupled with the frame without using rivets or screws so that the flour or other material does not form deposits any more and the hygiene is improved.

A first advantage of the present invention is that the hygiene and cleaning of the pan is much improved and the plates or pan remains free from deposits of flour or other material.

Another advantage is that the structural shapes suited to be coupled with the supporting surface for the oven product are carried out with a very simple automated technique, which permits to lower the cost of labour.

Another advantage of the present invention is a great stability and strength of the finished pan, the twist being reduced and the quality being higher.

All the above aims and advantages are reached according to the present invention through a supporting baking-plate or baking-pan carried out and shaped in particular to contain oven products such bread or the like, characterized by the fact that the supporting surface shows a flat or corrugated shape or other suitable shapes for the product to be contained and is inserted in a border or frame obtained by utilizing hollow metal structural shapes showing suitable slots in which the edge of the supporting surface is inserted.

Further features and details of the present invention will be better understood from the following specification given as a non-limiting example with reference to the accompanying drawing wherein:

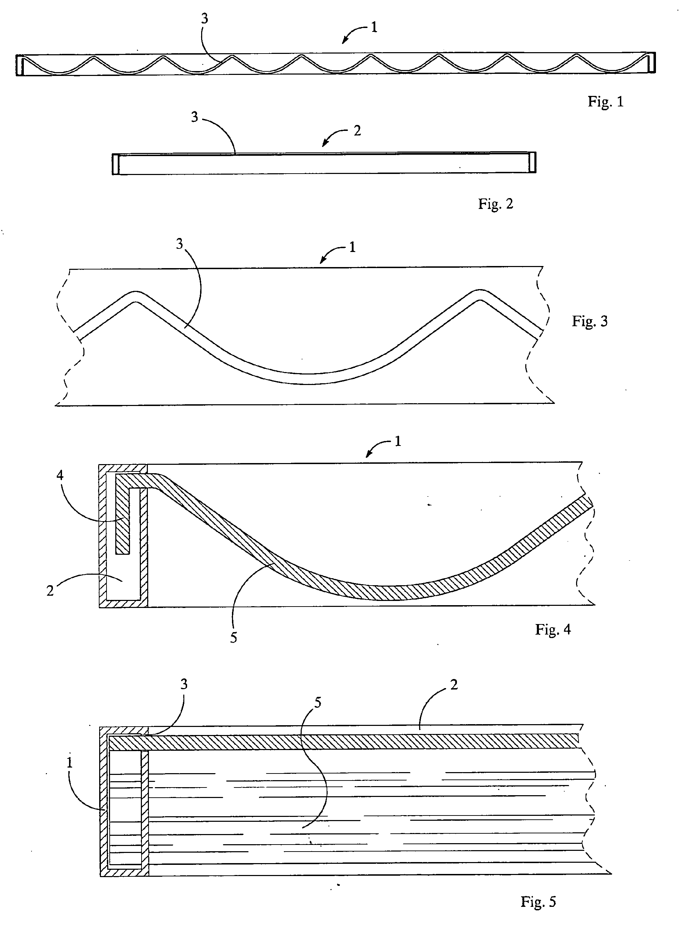

- Fig. 1 is a schematic front view of a lateral structural shape (long side) according to the present invention in case a corrugated supporting surface is utilized;
- Fig. 2 is a schematic front view of a structural shape (short side) according to the present invention;
- Fig. 3 is a schematic detailed view of the lateral structural shape showing the incised slot;
- Fig. 4 is a schematic view of a detail of the baking-plate in section across the long side of the frame;
- Fig. 5 is a schematic view of a detail of the baking-plate in section across the short side of the frame

With reference to the accompanying drawing, number 1 denotes the long side while number 2 denotes the short side of the border or frame of a baking-plate or pan for the support of oven products according to the present invention.

The border or frame of the baking-plate or baking-pan is made of four sides 1, 2 which are hollow structural shapes made preferably of metal and showing a squared section. Particular slots 3 are obtained along the inner surfaces of the sides 1, 2.

The said slots 3 are obtained mechanically by means of a mechanic pre-incision o by means of laser tools. The height and shape of the said slots correspond to the thickness and shape of the supporting surface of the baking-plate.

In case the supporting surface is perfectly horizontal, the four slots are equal and arranged at the same height while in case the supporting surface is corrugated or shaped, the slots are carried out in such a way that the short sides show horizontal slots while the long sides show corrugated slots or viceversa.

It is evident that the type of slot corresponds to the profile of the supporting surface to be inserted and therefore, the slot may show whatever shape depending on the profile of the supporting surface.

For the connection of the said structural shapes it is sufficient to bend the edges 4 of the supporting surface 5 upward or downward, to join the structural shapes to the said edges of the supporting surface and to fasten the angles with soldering points. To this end, the structural shapes are cut at an angle of 45° at their free ends.

Once the soldering has been finished off at the four angles by means of polishing tools, the baking-pan is ready to be utilized.

In case the supporting surface is flat, it is sufficient to bend the edges of the supporting surface at an angle of 90° and join the structural shapes showing a straight horizontal slot. At this point, the angles are soldered and may be finished off with abrasive tools.

It is evident that there may be provided many versions of the so-described baking-plate or pan as regards its shape and slot and the shape or section of the structural shapes or the utilization of suitable angular elements in place of the connecting soldering means of the structural shapes.

In any case, all the said versions are to be considered as included in the scope of the present invention as further explained as regards its peculiarities in the following claims.

## Claims

1. Supporting baking-plate or baking-pan carried out and shaped in particular to contain oven products such bread or the like, **characterized by** the fact that the supporting surface (5) shows a flat or corrugated shape or other suitable shapes for the product to be contained and is inserted in a frame obtained by utilizing hollow metal structural shapes showing suitable slots (3) in which the edge (4) of the supporting surface (5) is inserted.

2. Supporting baking-plate or baking-pan as claimed in the foregoing claim, **characterized by** the fact that the border or frame of the baking-plate or baking-pan is made of four sides (1, 2) which are hollow structural shapes made preferably of metal and showing a squared section, particular slots (3) being obtained along the inner surfaces of the sides (1, 2).

3. Supporting baking-plate or baking-pan as claimed in the foregoing claims, **characterized by** the fact that the said slots (3) are obtained mechanically by means of a mechanic pre-incision o by means of laser tools; the height and outline of the said slots correspond to the thickness and shape of the supporting surface of the baking-plate.

4. Supporting baking-plate or baking-pan as claimed in the foregoing claims, **characterized by** the fact that in case the supporting surface (5) is perfectly horizontal, the four slots (3) are equal and arranged at the same height while in case the supporting surface (5) is corrugated or shaped, the slots (3) are carried out in such a way that the short sides (2) show horizontal slots while the long sides (1) show corrugated slots or viceversa.

5. Supporting baking-plate or baking-pan as claimed in the foregoing claims, **characterized by** the fact that the type of slot (3) corresponds to the profile of the supporting surface to be inserted and therefore, the slot may show whatever shape depending on the profile of the supporting surface.

6. Supporting baking-plate or baking-pan as claimed in the foregoing claims, **characterized by** the fact that for the connection of the structural shapes it is sufficient to bend the edges (4) of the supporting surface (5) upward or downward, to join the structural shapes to the edges of the supporting surface and to fasten the angles with soldering points or other suited means.

7. Supporting baking-plate or baking-pan as claimed in the foregoing claims, **characterized by** the fact that the structural shapes are cut at an angle of 45° near their free ends.
